# EUROPÄISCHE PATENTANMELDUNG

(11) **EP 4 620 935 A1**
(43) Veröffentlichungstag der Anmeldung: **24.09.2025**
(21) Anmeldenummer: 24219398.5
(22) Anmeldetag: 12.12.2024
(51) Int. Cl.: C04B 28/18

(54) **VERFAHREN ZUR HERSTELLUNG EINES KALKSAND-MAUERSTEINS**

(30) Priorität: 20.12.2023 DE 102023135970
(71) Anmelder: Sievert Baustoffe SE & Co. KG, 49090 Osnabrück (DE)
(72) Erfinder: Kanig, Martin, 17235 Neustrelitz (DE); Zilg, Carsten, 79295 Sulzburg (DE); Fooken, Michael, 49076 Osnabrück (DE)
(74) Vertreter: Deters, Frank

(57) **Zusammenfassung**

Die Erfindung betrifft ein Verfahren zur Herstellung eines Mauersteins, bei dem eine Bindemittelmischung, optionale Zuschläge, eine Gesteinskörnung und Wasser zu einer Mauersteinmischung vermengt werden. Die Mauersteinmischung wird zu einem Mauersteinrohling gepresst, der in einen hydrothermal arbeitenden Autoklaven verbracht wird. Der Autoklav wird auf eine Haltetemperatur von 160 bis 210 °C unter Erreichen eines Sättigungsdampfdrucks erhitzt und der aus dem Mauersteinrohling dadurch entstandene fertige Mauerstein wird anschließend aus dem Autoklaven entnommen. Die Mauersteinmischung enthält 6 bis 8 Gew.-% der Bindemittelmischung, bis zu 6 Gew.-% Zuschläge und Rest Gesteinskörnung bezogen auf die Trockenmasse der Mauersteinmischung. Zur Herstellung der Bindemittelmischung wird eine erste Komponente mit einer zweiten Komponente vermengt und die Bindemittelmischung besteht zu 95 bis 99,5 Gew.-% aus der ersten Komponente und zu 5 bis 0,5 Gew.-% aus der zweiten Komponente. Die erste Komponente enthält zu mehr als 90 Gew.-% hydraulisch aktives Calciumhydrosilikat und Quarz oder Quarzsand, ist frei von Alit und enthält Calcium sowie Silizium in einem molaren Verhältnis von 0,2:1 bis maximal 1:1. Die zweite Komponente ist Portlandzement, Portlandkompositzement oder eine Mischung aus diesen beiden Zementarten.

## Beschreibung

Die Erfindung betrifft ein Verfahren zur Herstellung eines Mauersteins nach dem Oberbegriff des Patentanspruchs 1.

Ein derartiges Verfahren wird üblicherweise zur Herstellung eines Kalksandsteins verwendet. Dabei besteht die Bindemittelmischung überwiegend aus Calciumoxid. Zu dessen Herstellung wird Calciumcarbonat in der Regel in der Form von Kalkstein bei Temperaturen von etwa 800 °C entsäuert, wobei Kohlendioxid ausgetrieben wird und Calciumoxid entsteht. Der Herstellungsprozess ist also energieintensiv und es entsteht eine äquimolare Menge Kohlendioxid. Beide Effekte wirken sich nachteilig auf die Erderwärumg aus und sind daher unerwünscht.

Darüber hinaus ist ein Verfahren zur Herstellung eines Betonsteins verbreitet, bei dem als Bindemittel insbesondere Portlandzement verwendet wird. Dieser besteht zu über 90 Gewichtsprozent aus Portlandzementklinker. Die Herstellung von Portlandzementklinker aus Kalkstein sowie Tonen ist mit einem erheblichen Einsatz von Energie verbunden, da zunächst Calciumoxid aus Kalkstein bei Temperaturen von etwa 800 °C gewonnen werden muss, wobei Kohlendioxid freigesetzt wird. Anschließend wird das Calciumoxid mit Tonen bei bis zu 1450 °C zu Portlandzementklinker gebrannt. Dieser wird anschließend zu Portlandzement vermahlen.

Etwa 5 % des weltweiten Kohlendioxid-Ausstoßes wird durch die Herstellung von Portlandzement verursacht. Es gibt daher weltweit große Bestrebungen, die Verwendung von Portlandzement zu reduzieren. Die EP 2183195 B1 beschreibt ein einphasiges hydraulisches Bindemittel als Alternative zu Portlandzement. In der Praxis konnte sich dieses alternative Bindemittel bisher aber nicht in größerem Umfang durchsetzen.

Der Erfindung liegt die Aufgabe zugrunde, ein Verfahren zur Herstellung eines Mauersteins mit ausreichender Druckfestigkeit bereitzustellen, bei dem wenig Energie verbraucht und gleichzeitig wenig Kohlendioxid freigesetzt wird.

Die Aufgabe wird erfindungsgemäß durch ein Verfahren nach dem Oberbegriff des Patentanspruchs 1 gelöst, bei dem zur Herstellung der Bindemittelmischung eine erste Komponente mit einer zweiten Komponente vermengt wird und die Bindemittelmischung zu 95 bis 99,5 Gew.-% aus der ersten Komponente und zu 5 bis 0,5 Gew.-% aus der zweiten Komponente besteht. Die erste Komponente enthält dabei zu mehr als 90 Gew.-% hydraulisch aktives Calciumhydrosilikat und Quarz oder Quarzsand, ist frei von Alit und enthält Calcium sowie Silizium in einem molaren Verhältnis von 0,2:1 bis maximal 1:1. Quarz oder Quarzsand dienen dabei als feste silikatische Rohstoffe mit einem Vernetzungsgrad der Silikat-Baueinheiten von Q³ bis Q⁴. Die zweite Komponente ist Portlandzement, Portlandkompositzement oder eine Mischung aus diesen beiden Zementarten.

Der mit dem erfindungsgemäßen Verfahren hergestellte Mauerstein weist eine ausreichende Druckfestigkeit auf und kann bereits unmittelbar nach Herausnahme aus dem Autoklaven zum Weitertransport gestapelt werden. Bei dem erfindungsgemäßen Verfahren wird verglichen mit einem Betonstein oder auch einem Kalksandstein deutlich weniger Kohlendioxid freigesetzt und auch weniger Energie verbraucht. Die Einsparungen ergeben sich aus dem niedrigen Verhältnis des Calciums relativ zum Silicium in der Bindemittelmischung. Überraschender Weise wurde dabei festgestellt, dass trotz Einsatz von verhältnismäßig wenig Bindemittelmischung infolge der erfindungsgemäßen Kombination der beiden Komponenten in der Bindemittelmischung mit einem sehr hohen Anteil der ersten Komponente von 95 bis 99,5 Gew.-% und einem zwar niedrigen aber dennoch vorhandenen Anteil der zweiten Komponente von 0,5 bis 5 Gew.-% ein ausreichend druckfester Mauerstein in dem erfindungsgemäßen Verfahren hergestellt werden kann.

Die in der Bindemittelbildmischung enthaltenen Komponenten sind in dieser homogen verteilt. Auch die erste Komponente und die zweite Komponente der Bindemittelmischung sind jeweils in sich homogen verteilt. Die erste Komponente ist dabei eine in sich homogen verteilte Stoffmischung.

In einer bevorzugten Ausgestaltung der Erfindung wird die Haltetemperatur in dem Autoklaven für 1 bis 7 h, insbesondere für 3 bis 6 h gehalten. Diese Haltezeit in dem Autoklaven ist dabei ebenfalls eher niedrig im Vergleich zu bekannten Verfahren zur Kalksandsteinherstellung, wodurch zusätzlich Energie eingespart werden kann. Der in dem hydrothermal arbeitenden Autoklaven während der Haltezeit vorliegende Sättigungsdampfdruck ist unmittelbar von der gewählten Temperatur in dem Autoklaven abhängig.

In einer vorteilhaften Ausgestaltung der Erfindung enthält die Mauersteinmischung 2 bis 4 Gew.-% Kalksteinmehl als Zuschlag bezogen auf die Trockenmasse der Mauersteinmischung. Das Kalksteinmehl hat dabei eine Korngröße von weniger als 90 µm. Es dient als gefügeverdichtender Füllstoff und erhöht dadurch die Druckfestigkeit des Mauersteins.

In einer besonders bevorzugten Ausgestaltung der Erfindung wird die erste Komponente in einem zweistufigen Prozess hergestellt, bei dem zunächst silizium- und kalkhaltige Komponenten in einer Rohmischung homogenisiert und in einem hydrothermal arbeitenden Autoklaven in Gegenwart von Wasser oder Wasserdampf unter Druck einer Temperatur zwischen 140 °C bis 300 °C über eine Haltezeit von 1 bis 36h ausgesetzt werden und die Mischung anschließend im zweiten Prozessschritt getrocknet und gemeinsam mit Quarz oder Quarzsand vermahlen wird. Der zweite Prozess Schritt ist eine Reaktionsmahlung. Als kalkhaltige Komponenten dienen dabei gebrannter Kalk, Calciumcarbonat oder auch gelöschter Kalk. Im ersten Prozessschritt entstehen dabei Calciumhydrosilicate (bevorzugt α-C₂SH) als Zwischenprodukt, die aufgrund von Wasserstoffbrückenbindungen, an denen Silanolgruppen beteiligt sind, zunächst hydraulisch nicht aktiv sind. Im zweiten Prozessschritt erfolgt eine Reaktionsmahlung, bei der die Wasserstoffbrückenbindungen des Zwischenproduktes zerstört werden. Dabei entsteht ein hydraulisch aktives Bindemittel, das sich an den silikatischen Oberflächen des Quarzsandes anlagert und dort nach Wassergabe hydratisiert.

Mit Vorteil ist die erste Komponente ein einphasiges hydraulisches Bindemittel, das Silizium-, Calcium-, Sauerstoff- und Wasserstoff-Atome in einer Anordnung enthält, die Silikat-Baueinheiten mit einem mittleren Vernetzungsgrad größer als Q^{1,5} und Silanol-Gruppen umfasst, wobei kein oder ein Teil der Calcium-Atome durch ein sechsfach oder höher mit Sauerstoff koordiniertes Atom M[6]^{x+}, welches ausgewählt ist aus Na-, K-, Li-, Mg-, Sr-, Ba-, Mn-, Fe[+II]- oder Al[+III]-Atomen, und/oder kein oder ein Teil der Silizium-Atome durch ein tetraedrisch mit Sauerstoff koordiniertes Atom M[4]^{y+}, welches ausgewählt ist aus Al-, Ge-, B-, P-, Fe-, Be- oder Ti-Atomen, ersetzt sind, das molare Verhältnis [CaO + (x/2) · (M[6]^{x+}O_{x/2})] : [SiO₂ + M[4]^{y+}O_{y/2} ] einen Wert von 0,2 bis 1,0 aufweist und das Bindemittel 3,5 Gew.-% bis 20 Gew.-% Wasser enthält. Diese Definition entstammt in etwas eingeschränkter Form im Wesentlichen der EP 2183195 B1, auf die zur Klarstellung dessen, um was es sich bei der ersten Komponente der Bindemittelmischung im Sinne der vorgenannten Definition handelt, vollumfänglich Bezug genommen wird. Die EP 2183195 B1 soll bezüglich der vorgenannten beschränkten Merkmalsangabe der ersten Komponente der Bindemittelmischung zum Offenbarungsgehalt der Erfindung gehören.

In einer besonders bevorzugten Ausgestaltung der Erfindung wird die erste Komponente hergestellt durch
- Reaktionsmahlen eines ersten Ausgangsstoffes, der Calcium-, Silizium-, Sauerstoff- und Wasserstoff-Atome enthält, die in Form von strukturellem Wasser, Kristallwasser oder Hydroxid-Gruppen sowie von Silikat-Baueinheiten mit einem Vernetzungsgrad von Q⁰ bis Q² vorliegen, mit Quarz oder Quarzsand und,
- solange der Wassergehalt über 20 Gew.-% liegt, Trocknen des einphasigen hydraulischen Bindemittels auf einen Wassergehalt von 3,5 Gew-% bis 20 Gew.-%. Dieses Verfahren zur Herstellung der ersten Komponente der Bindemittelmischung entstammt in etwas eingeschränkter Form ebenfalls der EP 2183195 B1, auf die zur Klarstellung dessen, wie die erste Komponente der Bindemittelmischung im Sinne der vorgenannten Definition hergestellt wird, vollumfänglich Bezug genommen wird. Die EP 2183195 B1 soll auch bezüglich der vorgenannten beschränkten Merkmalsangabe der Herstellung der ersten Komponente der Bindemittelmischung zum Offenbarungsgehalt der Erfindung gehören.

Nachfolgend werden Ausführungsbeispiele zu dem erfindungsgemäßen Verfahren erläutert:
In drei Versuchen wird jeweils eine Mauersteinmischung aus 140 g Bindemittelmischung, 56 g Kalksteinmehl (sh-minerals MS CC80 Juramehl) als Zuschlag, 1804 g gewaschener trockener quarzitischer Gesteinskörnung der Sortierung 0 - 8 mm sowie 150 g Wasser hergestellt und miteinander homogen vermengt. Die Mauersteinmischung wird in einer Presse bei 12 MPa zu einem Mauersteinrohling mit 97 mm Höhe und 113 mm Durchmesser verpresst. Der entstandene Mauersteinrohling ist grünstandsfest. Der Mauersteinrohling wird in einen hydrothermal arbeitenden Autoklaven verbracht. Die Autoklavierzeit beträgt insgesamt sieben Stunden wovon je 1,5 Stunden Aufheiz- bzw. Abkühlzeit sind. Der Autoklav wird über eine Haltezeit von 4 Stunden bei einer Haltetemperatur von 175 °C in Gegenwart von Wasser und Wasserdampf gehalten. Dabei stellt sich ein Sättigungsdampfdruck von etwa 12 bar ein. Die Druckfestigkeit des anschließend aus dem Autoklaven entnommenen Mauersteins wird nach DIN EN 772-1 geprüft.

In einem ersten Versuch wird eine nicht erfindungsgemäße Bindemittelmischung verwendet, die ausschließlich aus der ersten Komponente der erfindungsgemäßen Bindemittelmischung besteht. Dieser Versuch dient als Vergleichsversuch. Die gemessene Druckfestigkeit des damit hergestellten fertigen Mauersteins beträgt 5,4 N/mm².

In einem zweiten Versuch wird eine erfindungsgemäße Bindemittelmischung aus 138,6 g der ersten Komponente und 1,4 g Portlandzement (CEM I 42,5R) als zweiter Komponente verwendet. Die gemessene Druckfestigkeit des damit hergestellten fertigen Mauersteins beträgt 7,5 N/mm².

In einem dritten Versuch wird eine erfindungsgemäße Bindemittelmischung aus 133 g der ersten Komponente und 7 g Portlandzement (CEM I 42,5R) als zweiter Komponente verwendet. Die gemessene Druckfestigkeit des damit hergestellten fertigen Mauersteins beträgt 6,9 N/mm².

Die drei Versuche zeigen, dass die mit dem erfindungsgemäßen Verfahren hergestellten Mauersteine eine ausreichende Druckfestigkeit unmittelbar nach Entnahme aus dem Autoklaven aufweisen. Zudem zeigen die Versuche, dass die Druckfestigkeit der mit dem erfindungsgemäßen Verfahren hergestellten Mauersteine durch die geringe Beimengung der zweiten Komponente zur ersten Komponente in der erfindungsgemäßen Bindemittelmischung um mehr als 30 % gesteigert werden kann. Zudem zeigen die Versuche, dass ein höherer Anteil der zweiten Komponente in der Bindemittelmischung relativ zur ersten Komponente die Druckfestigkeit nicht äquivalent hierzu ansteigen lässt.

## Patentansprüche

1. Verfahren zur Herstellung eines Mauersteins, bei dem eine Bindemittelmischung, optionale Zuschläge, eine Gesteinskörnung und Wasser zu einer Mauersteinmischung vermengt werden, die Mauersteinmischung zu einem Mauersteinrohling gepresst wird, der Mauersteinrohling in einen hydrothermal arbeitenden Autoklaven verbracht wird, der Autoklav auf eine Haltetemperatur von 160 bis 210 °C unter Erreichen eines Sättigungsdampfdrucks erhitzt wird und der aus dem Mauersteinrohling dadurch entstandene fertige Mauerstein anschließend aus dem Autoklaven entnommen wird, wobei die Mauersteinmischung 6 bis 8 Gew.-% der Bindemittelmischung, bis zu 6 Gew.-% Zuschläge und Rest Gesteinskörnung bezogen auf die Trockenmasse der Mauersteinmischung enthält, **dadurch gekennzeichnet, dass** zur Herstellung der Bindemittelmischung eine erste Komponente mit einer zweiten Komponente vermengt wird und die Bindemittelmischung zu 95 bis 99,5 Gew.-% aus der ersten Komponente und zu 5 bis 0,5 Gew.-% aus der zweiten Komponente besteht, wobei die erste Komponente zu mehr als 90 Gew.-% hydraulisch aktives Calciumhydrosilikat und Quarz oder Quarzsand enthält, frei von Alit ist und Calcium sowie Silizium in einem molaren Verhältnis von 0,2:1 bis maximal 1:1 enthält und wobei die zweite Komponente Portlandzement, Portlandkompositzement oder eine Mischung aus diesen beiden Zementarten ist.

2. Verfahren nach Anspruch 1, **dadurch gekennzeichnet, dass** der Autoklav die Haltetemperatur und den Sättigungsdampfdruck für 1 bis 7 h, insbesondere für 3 bis 6 h hält.

3. Verfahren nach einem der vorhergehenden Ansprüche, **dadurch gekennzeichnet, dass** die Mauersteinmischung 2 bis 4 Gew.-% Kalksteinmehl als Zuschlag bezogen auf die Trockenmasse der Mauersteinmischung enthält.

4. Verfahren nach einem der vorhergehenden Ansprüche, **dadurch gekennzeichnet, dass** die erste Komponente in einem zweistufigen Prozess hergestellt wird, bei dem zunächst silizium- und kalkhaltige Komponenten in einer Rohmischung homogenisiert und in einem hydrothermal arbeitenden Autoklaven in Gegenwart von Wasser oder Wasserdampf unter Druck einer Temperatur zwischen 140 °C bis 300 °C über eine Haltezeit von 1 bis 36 h ausgesetzt werden und die Mischung anschließend im zweiten Prozessschritt getrocknet und gemeinsam mit Quarz oder Quarzsand vermahlen wird.

5. Verfahren nach einem der vorhergehenden Ansprüche, **dadurch gekennzeichnet, dass** die erste Komponente ein einphasiges hydraulisches Bindemittel ist, das Silizium-, Calcium-, Sauerstoff- und Wasserstoff-Atome in einer Anordnung enthält, die Silikat-Baueinheiten mit einem mittleren Vernetzungsgrad größer als Q^{1,5} und Silanol-Gruppen umfasst, wobei kein oder ein Teil der Calcium-Atome durch ein sechsfach oder höher mit Sauerstoff koordiniertes Atom M[6]^{x+}, welches ausgewählt ist aus Na-, K-, Li-, Mg-, Sr-, Ba-, Mn-, Fe[+II]- oder Al[+III]-Atomen, und/oder kein oder ein Teil der Silizium-Atome durch ein tetraedrisch mit Sauerstoff koordiniertes Atom M[4]^{y+}, welches ausgewählt ist aus Al-, Ge-, B-, P-, Fe-, Be- oder Ti-Atomen, ersetzt sind, das molare Verhältnis [CaO + (x/2) · (M[6]^{x+}O_{x/2})] : [SiO₂ + M[4]^{y+}O_{y/2} ] einen Wert von 0,2 bis 1,0 aufweist und das Bindemittel 3,5 Gew.-% bis 20 Gew.-% Wasser enthält.

6. Verfahren nach einem der vorhergehenden Ansprüche, **dadurch gekennzeichnet, dass** die erste Komponente hergestellt wird durch
- Reaktionsmahlen eines ersten Ausgangsstoffes, der Calcium-, Silizium-, Sauerstoff- und Wasserstoff-Atome enthält, die in Form von strukturellem Wasser, Kristallwasser oder Hydroxid-Gruppen sowie von Silikat-Baueinheiten mit einem Vernetzungsgrad von Q⁰ bis Q² vorliegen, mit Quarz oder Quarzsand und,
- solange der Wassergehalt über 20 Gew.-% liegt, Trocknen des einphasigen hydraulischen Bindemittels auf einen Wassergehalt von 3,5 Gew-% bis 20 Gew.-%.
